# EUROPEAN PATENT APPLICATION

(11) **EP 4 572 315 A1**
(43) Date of publication of application: **18.06.2025**
(21) Application number: 23914480.1
(22) Date of filing: 14.12.2023
(51) Int. Cl.: H04N 23/50

(54) **VOICE COIL MOTOR, CAMERA MODULE, AND ELECTRONIC DEVICE**

(30) Priority: 06.01.2023 CN 202310021082
(71) Applicant: Huawei Technologies Co., Ltd., Shenzhen, Guangdong 518129 (CN)
(72) Inventor: KUO, Li-Te, Shenzhen, Guangdong 518129 (CN); LU, Lei, Shenzhen, Guangdong 518129 (CN); FU, Qianyan, Shenzhen, Guangdong 518129 (CN); DING, Ruiming, Shenzhen, Guangdong 518129 (CN); MAO, Jianzhao, Shenzhen, Guangdong 518129 (CN); WEI, Ying, Shenzhen, Guangdong 518129 (CN)
(74) Representative: Körber, Martin Hans
(86) International application number: PCT/CN2023/138781
(87) International publication number: WO 2024/146346

(57) **Abstract**

A voice coil motor, a camera module, and an electronic device are provided. The voice coil motor is used in the camera module. The voice coil motor includes a support component (1), a transmission component (2), and a lubrication structure (3). The transmission component (2) moves relative to the support component (1). The lubrication structure (3) is disposed between the support component (1) and the transmission component (2). The lubrication structure (3) includes lubricating oil and a plurality of spherical particles dispersed in the lubricating oil. At least a part of the spherical particles have one side in contact with the support component (1) and another side in contact with the transmission component (2). When the support component (1) and the transmission component (2) move relative to each other, at least the part of the spherical particles roll relative to the support component (1) and the transmission component (2). Rolling friction is formed between the spherical particle and the transmission component (2) and between the spherical particle and the support component (1), to effectively reduce friction resistance, reduce steady-state power consumption of the motor, and also achieve a mute effect. In addition, the lubricating oil can form an oil film on a surface of the spherical particle, so that the spherical particle can achieve a continuous lubrication effect during working.

## Description

The present invention claims priority to Chinese Patent Application No. 202310021082.7, filed with the China National Intellectual Property Administration on January 6, 2023 and entitled "VOICE COIL MOTOR, CAMERA MODULE, AND ELECTRONIC DEVICE", which is incorporated herein by reference in its entirety.

### TECHNICAL FIELD

This application relates to the field of motor technologies, and in particular, to a voice coil motor, a camera module, and an electronic device.

### BACKGROUND

Currently, with rapid development of camera modules of mobile phones, motors become indispensable components of the camera modules. An existing motor includes a moving member and a fixed member. The moving member can move relative to the fixed member. However, there is usually sliding friction between the moving member and the fixed member, a kinematic friction coefficient is large, and the moving member needs to overcome extra friction force during moving, resulting in high power consumption of the motor.

### SUMMARY

An objective of this application is to provide a voice coil motor, a camera module, and an electronic device, to resolve a problem that power consumption of an existing motor is high because the motor needs to overcome friction force between a moving member and a fixed member.

A first aspect of this application provides a voice coil motor. The voice coil motor is used in a camera module. The voice coil motor includes:
a support component;
a transmission component, where the transmission component moves relative to the support component; and
a lubrication structure, where the lubrication structure is disposed between the support component and the transmission component, the lubrication structure includes lubricating oil and a plurality of spherical particles dispersed in the lubricating oil, at least a part of the spherical particles have one side in contact with the support component and another side in contact with the transmission component, and when the support component and the transmission component move relative to each other, at least the part of the spherical particles roll relative to the support component and the transmission component.

When the transmission component moves relative to the support component, the spherical particle can be squeezed by the transmission component and the support component to roll, to form rolling friction between the transmission component, the support component, and the spherical particle. Friction force between the transmission component, the support component, and the spherical particle is far less than sliding friction force between the transmission component and the support component. The plurality of spherical particles are dispersed, so that through the spherical particles, rolling friction can be formed at a plurality of positions of interfaces that are of the transmission component and the support component and that move relative to each other, to effectively reduce friction resistance, reduce steady-state power consumption of the motor, and also achieve a mute effect. In addition, the spherical particle is disposed in the lubricating oil, and the lubricating oil can form an oil film on a surface of the spherical particle. The oil film can further reduce friction between the spherical particle, and the transmission component and the support component. In this way, even if the spherical particle rolls, because the spherical particle is located inside the lubricating oil, it can be ensured that the surface of the spherical particle can always be wrapped with the oil film, and a lubrication effect can be continuously achieved between the spherical particle, and the transmission component and the support component. In addition, the lubricating oil has specific viscosity, so that it can be ensured that the spherical particle is adhered to the lubricating oil without being separated. This improves an overall service life of the lubrication structure.

In a possible design, a diameter of the spherical particle is 10 µm to 500 µm.

A diameter size of the spherical particle is at a micron level, and can match a gap between the transmission component and the support component. The spherical particle can be in contact with both the transmission component and the support component, and can be covered with the lubricating oil. This can continuously achieve the lubrication effect in relative movement between the spherical particle, and the transmission component and the support component, effectively reduce the friction resistance, further help reduce an entire size of the motor, and implement a miniaturization design of the camera module. In addition, the spherical particle within the size range also has specific structural strength, and can still maintain a form when being squeezed by the transmission component and the support component, without being damaged. This can ensure stability of movement of the transmission component relative to the support component.

In a possible design, the support component is provided with a first sliding surface. The first sliding surface is a surface that is of the support component and that is configured to slide relative to the transmission component. The transmission component is provided with a second sliding surface. The second sliding surface is a surface that is of the transmission component and that is configured to slide relative to the support component. The lubrication structure is disposed between the first sliding surface and the second sliding surface. The first sliding surface and the second sliding surface may be separately one of a plane, a cambered surface, a V-shaped surface, or a U-shaped surface. In other words, the first sliding surface and the second sliding surface may be any two of the plane, the cambered surface, the V-shaped surface, or the U-shaped surface in cooperation, so that sliding surfaces of the support component and the transmission component are flexibly disposed.

In a possible design, one of the support component and the transmission component is provided with a protrusion, and the other of the support component and the transmission component is provided with a sliding slot. The transmission component is slidably connected to the support component through fitting between the sliding slot and the protrusion. The lubrication structure is disposed between the sliding slot and the protrusion. The fitting between the sliding slot and the protrusion may be understood as that a recess direction of a slot body of the sliding slot is consistent with a protrusion direction of the protrusion.

Through fitting between the protrusion and the sliding slot, guidance is provided for relative movement between the transmission component and the support component, and stability of movement of the transmission component relative to the support component is ensured.

In a possible design, the sliding slot is one of an arc-shaped slot, a V-shaped slot, a U-shaped slot, or a trapezoidal slot. Regardless of which shape is used, the protrusion can be guided, and a design of the sliding slot is more flexible. The lubrication structure is a solid-liquid two-phase structure including the liquid lubricating oil and the solid spherical particles. Regardless of which shape is used for the sliding slot, the lubrication structure can be disposed between the sliding slot and the protrusion, without occupying extra space.

In a possible design, a cross-sectional shape of the protrusion is one of a semicircular arc shape, an elliptical arc shape, a U shape, a triangle, or a trapezoid. Regardless of which shape is used for the protrusion, the solid-liquid two-phase lubrication structure can be disposed between the protrusion and the sliding slot, to reduce friction between the transmission component and the support component and reduce steady-state power consumption of the motor.

In a possible design, at least one of an outer surface of the protrusion and an inner surface of the sliding slot is provided with a groove. The lubrication structure is disposed in the groove. A depth of the groove is less than the diameter of the spherical particle. In this way, the lubrication structure can be restricted, and the lubricating oil and the spherical particles can be prevented from irregularly diffusing.

In a possible design, the support component is provided with a guide shaft. The transmission component is provided with a guide hole or a guide slot. The guide hole or the guide slot is slidably sleeved on the guide shaft. The lubrication structure is disposed between the guide hole or the guide slot and the guide shaft.

When the transmission component is provided with the guide hole, the guide shaft may penetrate into the guide hole, and the transmission component may slide on the guide shaft via the guide hole. The lubrication structure may be filled between an inner wall of the guide hole and the guide shaft. When the transmission component is provided with the guide slot, the guide slot may be sleeved on at least a part of a periphery in a circumferential direction of the guide shaft, so that the transmission component may slide on the guide shaft via the guide slot. The lubrication structure may be disposed between the guide slot and the guide shaft. In this way, a cooperation form between the transmission component and the support component and an arrangement form of the lubrication structure can be more flexible.

In a possible design, at least one of an outer surface of the guide shaft and an inner surface of the guide hole or the guide slot is provided with a groove. The lubrication structure is disposed in the groove. Therefore, the lubrication structure can be prevented from flowing irregularly. A depth of the groove is less than the diameter of the spherical particle. This can ensure that at least a part of the spherical particle can extend out of the groove to be in contact with an external component.

In a possible design, a plurality of grooves are spaced from each other in a direction in which the transmission component and the support component slide relative to each other. Therefore, rolling friction can be formed through the spherical particle in a large area in which the transmission component cooperates with the support component, and lubrication can be implemented by using the lubricating oil. This improves an effect of reducing friction force.

In a possible design, one groove is disposed, and the groove continuously extends in a direction in which the transmission component and the support component slide relative to each other. Therefore, consistency of reducing friction force between the transmission component and the support component and improving the lubrication effect can be improved, and stable movement between the transmission component and the support component can be ensured.

In a possible design, one of the support component and the transmission component is provided with a first magnetic member, and the other of the support component and the transmission component is provided with a second magnetic member or a magnetic conductive member. The support component and the transmission component are squeezed on two sides of at least the part of the spherical particles through adsorption cooperation between the first magnetic member and the second magnetic member or adsorption cooperation between the first magnetic member and the magnetic conductive member.

Mutual attraction force is generated between the first magnetic member and the second magnetic member or the magnetic conductive member. Through the attraction force, an outer surface of one side of the protrusion closely presses against an inner surface of one side of the sliding slot, and the spherical particle disposed between surfaces that are of the protrusion and the sliding slot and that press against each other may be squeezed between the protrusion and the sliding slot. Therefore, the spherical particle can reliably and stably roll between the protrusion and the sliding slot. This helps reduce friction force between the protrusion and the sliding slot. In addition, a position at which the protrusion and the sliding slot press against each other may be used as a reference for relative movement between the transmission component and the support component. This can avoid relative shake between the transmission component and the support component, ensure stable movement of the transmission component, and have high transmission precision. Both the first magnetic member 4 and the second magnetic member may be magnets.

In a possible design, the first magnetic member is disposed in a side direction or at the bottom of the support component. The second magnetic member or the magnetic conductive member is disposed in a side direction or at the bottom of the transmission component. Therefore, both the support component and the transmission component have side parts that can press against each other. This prevents relative shake between the support component and the transmission component, and helps flexibly dispose the first magnetic member and the second magnetic member or the magnetic conductive member.

In a possible design, one of the support component and the transmission component is provided with a coil, and the other of the support component and the transmission component is provided with a third magnetic member. The transmission component moves relative to the support component under drive of driving force generated through cooperation between the coil and the third magnetic member after the coil is electrified.

In a possible design, a material of the spherical particle is metal, metal oxide, ceramic, or plastic. Therefore, the spherical particle can have reliable structural strength, and can maintain a spherical form, and it is ensured that the spherical particle normally rolls during working.

In a possible design, the support component and the transmission component each are an integrated structure. Therefore, the support component or the transmission component can have high structural reliability, and is also convenient for processing and manufacturing. In addition, for a surface that is of the support component or the transmission component and that is configured for mutual cooperation, in an integration manner, consistency of the surface can be improved, so that the support component cooperates with the transmission component more reliably. It can be ensured that, when the lubrication structure is filled between the support component and the transmission component, the spherical particle can be in rolling contact with the support component and the transmission component. This improves the effect of reducing the friction force.

A second aspect of this application further provides a camera module, including a lens assembly and the voice coil motor provided in the first aspect of this application. The lens assembly is connected to the transmission component of the voice coil motor. The support component of the voice coil motor is provided with a first hole. One of the support component and the transmission component is provided with the coil, and the other of the support component and the transmission component is provided with the third magnetic member. The coil and the third magnetic member are spaced from each other in a direction perpendicular to a center line of the first hole. Under drive of the transmission component, the lens assembly moves for focusing in the first hole in a direction parallel to the center line of the first hole.

The camera module using the voice coil motor provided in the first aspect of this application has same technical effects as the foregoing voice coil motor. Details are not described herein again.

A third aspect of this application further provides a camera module, including an image obtaining apparatus and the voice coil motor provided in the first aspect of this application. The image obtaining apparatus is connected to the transmission component of the voice coil motor. The support component of the voice coil motor is provided with a second hole. The image obtaining apparatus obtains an external image through the second hole. One of the support component and the transmission component is provided with the coil, and the other of the support component and the transmission component is provided with the third magnetic member. The coil and the third magnetic member are spaced from each other in a direction parallel to a center line of the second hole. Under drive of the transmission component, the image obtaining apparatus moves in a direction perpendicular to the center line of the second hole, to compensate for a jitter amount of the camera module.

The camera module using the voice coil motor provided in the first aspect of this application has same technical effects as the foregoing voice coil motor. Details are not described herein again.

In a possible design, the image obtaining apparatus includes a lens assembly or an image sensor. Both the lens assembly and the image sensor can obtain an external image. During actual application, one of the lens assembly and the image sensor is used based on a structure configuration.

A fourth aspect of this application further provides an electronic device, including the voice coil motor provided in the first aspect of this application.

The electronic device using the voice coil motor provided in the first aspect of this application has same technical effects as the foregoing voice coil motor. Details are not described herein again.

It should be understood that the foregoing general descriptions and the following detailed descriptions are merely examples, and are not intended to limit this application.

### BRIEF DESCRIPTION OF DRAWINGS

FIG. 1 is a diagram of a structure of a voice coil motor according to this application;
FIG. 2 is a sectional view at a position A-A in FIG. 1;
FIG. 3 is a diagram of a structure of a camera module having an auto focus function;
FIG. 4 is a partial exploded view of a camera module having an auto focus function;
FIG. 5 is a diagram of a partial structure of a camera module having an optical image stabilization function;
FIG. 6 is a sectional view at a position D-D in FIG. 5;
FIG. 7 is a sectional view at a position E-E in FIG. 5;
FIG. 8 is an enlarged view at a position B in FIG. 2;
FIG. 9 is a diagram of cooperation between a first sliding surface and a second sliding surface according to an embodiment of this application;
FIG. 10 is a diagram of cooperation between a first sliding surface and a second sliding surface according to another embodiment of this application;
FIG. 11 is a diagram of cooperation between a first sliding surface and a second sliding surface according to another embodiment of this application;
FIG. 12 is a diagram of cooperation between a first sliding surface and a second sliding surface according to another embodiment of this application;
FIG. 13 is a diagram of a structure of a support component;
FIG. 14 is a diagram of a structure of a transmission component; and
FIG. 15 is an enlarged view at a position C in FIG. 2.

Reference numerals:
1: support component;
   11: protrusion;
      111: top surface;
      112: outer side surface;
   12: first sliding surface;
   13: guide shaft;
   14: first magnetic member;
   15: first hole;
   16: second hole;
2: transmission component;
   21: sliding slot;
      211: bottom surface;
      212: inner side surface;
   22: second sliding surface;
   23: second magnetic member;
3: lubrication structure;
   31: spherical particle;
   32: lubricating oil;
4: groove;
5: lens assembly;
6: coil;
7: third magnetic member; and
8: image obtaining apparatus.

The accompanying drawings herein are incorporated into this specification and constitute a part of this specification, to show embodiments in accordance with this application, and are used together with this specification to explain the principle of this application.

### DESCRIPTION OF EMBODIMENTS

To better understand technical solutions of this application, the following describes embodiments of this application in detail with reference to the accompanying drawings. It should be understood that the specific embodiments described herein are merely used to explain this application but are not intended to limit this application.

In descriptions of this application, unless otherwise specified and limited, the terms "first" and "second" are merely intended for a purpose of description, and should not be understood as an indication or implication of relative importance. Unless otherwise specified or stated, the term "a plurality of" means two or more than two. The terms "connection", "fastening" and the like should be understood in a broad sense. For example, the "connection" may be a fixed connection, or may be a detachable connection, an integrated connection, or an electrical connection, or may be a direct connection, or may be an indirect connection by using an intermediate medium. A person of ordinary skill in the art may understand specific meanings of the foregoing terms in this application in specific cases.

A motor is an indispensable component of a camera module of an electronic device like a mobile phone or a computer. An existing motor usually includes a spring motor and a sliding contact motor. For the spring motor, one spring is disposed on each of two sides in a movement direction of a moving member, at least some parts of the springs on the two sides are fixedly connected to the moving member, and at least some parts of the springs on the two sides are also fixedly connected to a fixed member. When the moving member moves, a spring on one side of the moving member may generate compression deformation, and a spring on the other side may generate stretching deformation. Regardless of stretching deformation or compression deformation of the spring, resistance is caused to movement of the moving member, and the moving member needs to overcome the resistance from the spring during movement. This greatly increases steady-state power consumption of the motor. In addition, because the spring has specific rigidity, the motor cannot implement large-stroke movement.

For the sliding contact motor, a moving member and a fixed member slide in cooperation. When the moving member slides relative to the fixed member, sliding friction is formed between the moving member and the fixed member, and friction coefficients of contact interfaces of the moving member and the fixed member are large. As a result, the motor needs to overcome extra sliding friction force during working, power consumption of the motor increases, and high noise is generated on friction interfaces.

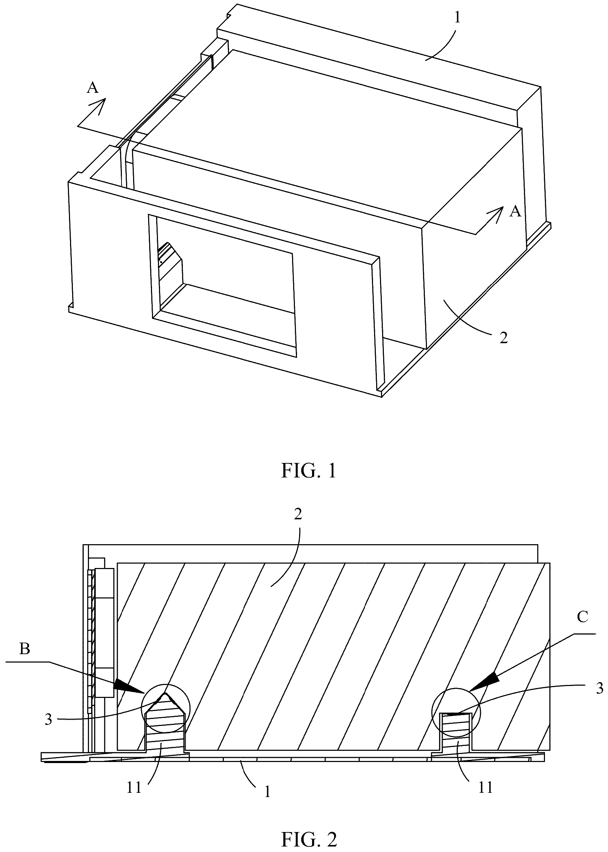

FIG. 1 is a diagram of a structure of a voice coil motor according to an embodiment of this application. With reference to FIG. 1, this embodiment of this application provides the voice coil motor (Voice Coil Motor, VCM). The voice coil motor may be an auto focus (Auto Focus, AF) micro motor or an optical image stabilization (Optical Image Stabilization, OIS) micro motor. Certainly, the voice coil motor may alternatively be a motor that uses the structure of the voice coil motor and that can implement another function. The voice coil motor may be used in a camera module. The camera module may be a camera module using a voice coil motor having an auto focus function, or a camera module using a voice coil motor having an optical image stabilization function. In addition, the camera module using the voice coil motor provided in this application may be used in any electronic device having a camera function. The electronic device may be an electronic device having a camera function, for example, a mobile phone, a tablet computer, a desktop computer, a laptop computer, a handheld computer, a notebook computer, an ultra-mobile personal computer (ultra-mobile personal computer, UMPC), a netbook, a wearable device, a vehicle-mounted device, a smart home device, and/or a smart city device. A specific type of the electronic device is not specifically limited in embodiments of this application.

FIG. 2 is a sectional view at a position A-A in FIG. 1. With reference to FIG. 2, the voice coil motor includes a support component 1, a transmission component 2, and a lubrication structure 3. The support component 1 may be a main structure of the voice coil motor, and is configured to support various functional or non-functional structural components. The transmission component 2 can move relative to the support component 1, and may drive an assembly like a lens or an image sensor to move synchronously to implement a function like focusing or image stabilization.

Specifically, one of the support component 1 and the transmission component 2 is provided with a coil, and the other of the support component 1 and the transmission component 2 is provided with a third magnetic member. Optionally, the support component 1 is provided with the coil, and the transmission component 2 is provided with the third magnetic member. After being electrified, the coil can cooperate with the third magnetic member to generate driving force. The driving force is Lorentz force, and the driving force can drive the transmission component 2 to move relative to the support component 1. A direction of a current in the coil is changed, so that a direction of the driving force can be changed. In this way, the transmission component 2 moves reciprocally, to drive a lens assembly to move in a direction parallel to an optical axis to implement focusing, or drive an image obtaining apparatus to move in a direction perpendicular to the optical axis to implement image stabilization. The third magnetic member may be a magnet.

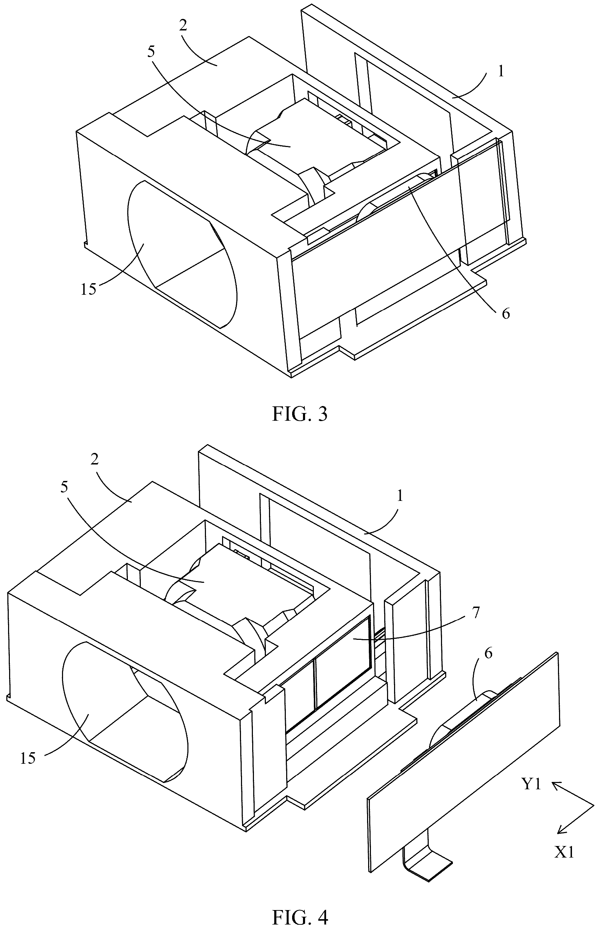

For example, FIG. 3 is a diagram of a structure of a camera module having an auto focus function. With reference to FIG. 3, when the voice coil motor is used in the camera module having the auto focus function, the camera module further includes a lens assembly 5. The lens assembly 5 is connected to the transmission component 2 of the voice coil motor. FIG. 4 is a partial exploded view of the camera module having the auto focus function. With reference to FIG. 4, the support component 1 of the voice coil motor is provided with a first hole 15, one of the support component 1 and the transmission component 2 is provided with a coil 6, and the other of the support component 1 and the transmission component 2 is provided with a third magnetic member 7. In FIG. 4, the coil 6 is disposed on the support component 1, and the third magnetic member 7 is disposed on the transmission component 2. The coil 6 and the third magnetic member 7 are spaced from each other in a direction perpendicular to a center line of the first hole 15. A direction of the center line is a direction X1 shown in FIG. 4, and the direction perpendicular to the center line is a direction Y1 shown in FIG. 4. Under drive of the transmission component 2, the lens assembly 5 moves for focusing in the first hole 15 in the direction X1 parallel to the center line of the first hole 15.

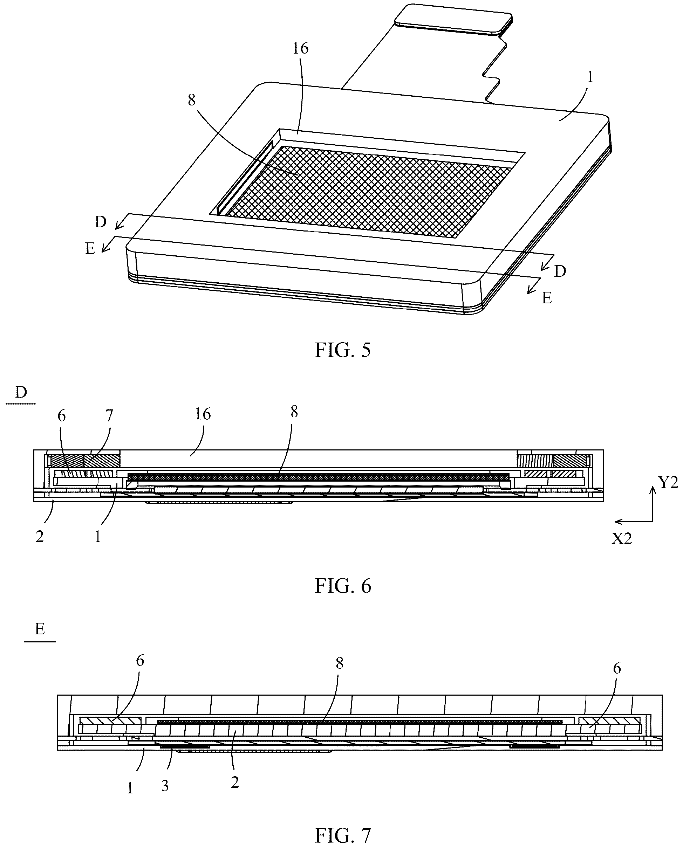

For example, FIG. 5 is a diagram of a partial structure of a camera module having an optical image stabilization function, with a lens assembly removed. With reference to FIG. 5, when the voice coil motor is used in the camera module having the optical image stabilization function, the camera module further includes an image obtaining apparatus 8. The image obtaining apparatus 8 is connected to the transmission component 2 of the voice coil motor. With reference to FIG. 5, the support component 1 of the voice coil motor is provided with a second hole 16, and the image obtaining apparatus 8 obtains an external image through the second hole 16. FIG. 6 is a sectional view at a position D-D in FIG. 5. With reference to FIG. 6, one of the support component 1 and the transmission component 2 is provided with a coil 6, and the other of the support component 1 and the transmission component 2 is provided with a third magnetic member 7. In FIG. 6, the coil 6 is disposed on the transmission component 2, and the third magnetic member 7 is disposed on the support component 1. The coil 6 and the third magnetic member 7 are spaced from each other in a direction parallel to a center line of the second hole 16. A direction of the center line is a direction Y2 shown in FIG. 6, and a direction perpendicular to the center line is a direction X2 shown in FIG. 6. Under drive of the transmission component 2, the image obtaining apparatus 8 moves in the direction perpendicular to the center line of the second hole 16, to compensate for a jitter amount of the camera module, and implement the optical image stabilization function.

The image obtaining apparatus 8 may include a lens assembly or an image sensor. Both the lens assembly and the image sensor can obtain an external image. In FIG. 5 to FIG. 7, the image sensor is used as an example. During actual application, one of the lens assembly and the image sensor is used based on a structure configuration.

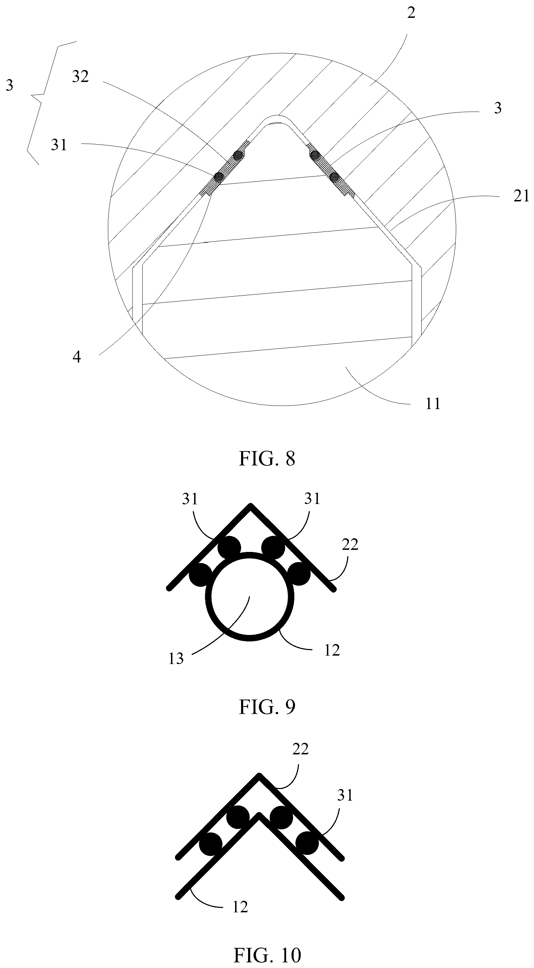

In this embodiment, the transmission component 2 is in sliding contact with the support component 1. To reduce sliding resistance between the transmission component 2 and the support component 1, the lubrication structure 3 may be disposed between the support component 1 and the transmission component 2. FIG. 8 is an enlarged view at a position B in FIG. 2. With reference to FIG. 8, the lubrication structure 3 includes lubricating oil 32 and a plurality of spherical particles 31 dispersed in the lubricating oil 32. At least a part of the spherical particles 31 have one side in contact with the support component 1 and another side in contact with the transmission component 2. When the support component 1 and the transmission component 2 move relative to each other, at least the part of the spherical particles 31 roll relative to the support component 1 and the transmission component 2. FIG. 8 is a diagram in which the lubrication structure 3 is disposed in the voice coil motor having the auto focus function. FIG. 7 is a sectional view at a position E-E in FIG. 5. FIG. 7 is a diagram in which the lubrication structure 3 is disposed in the voice coil motor having the optical image stabilization function. With reference to FIG. 7, the lubrication structure 3 may be disposed between the bottom of the transmission component 2 and the bottom of the support component 1, so that at least a part of the spherical particles 31 in the lubrication structure 3 can be in rolling contact with both the bottom of the transmission component 2 and the bottom of the support component 1.

The lubricating oil 32 may be various types of grease having specific lubricating viscosity, and may be liquid oil, ointment oil, or the like. The plurality of spherical particles 31 may be dispersed in the lubricating oil 32. A surface of the spherical particle 31 is a spherical surface. When the transmission component 2 moves relative to the support component 1, the spherical particle 31 can be squeezed by the transmission component 2 and the support component 1 to roll, to form rolling friction between the transmission component 2, the support component 1, and the spherical particle 31, friction force between the transmission component, the support component, and the spherical particle is far less than sliding friction force between the transmission component 2 and the support component 1, and the plurality of spherical particles 31 are dispersed, so that through the spherical particles 31, rolling friction can be formed at a plurality of positions of interfaces that are of the transmission component 2 and the support component 1 and that move relative to each other, to effectively reduce friction resistance, reduce steady-state power consumption of the motor, and also achieve a mute effect. In addition, the spherical particle 31 is disposed in the lubricating oil 32, and the lubricating oil 32 can form an oil film on the surface of the spherical particle 31, and the oil film can further reduce friction between the spherical particle 31, and the transmission component 2 and the support component 1. In this way, even if the spherical particle 31 rolls, because the spherical particle 31 is located inside the lubricating oil 32, it can be ensured that the surface of the spherical particle 31 can always be wrapped with the oil film, and a lubrication effect can be continuously achieved between the spherical particle 31, and the transmission component 2, and the support component 1. In addition, the lubricating oil 32 has specific viscosity, so that it can be ensured that the spherical particle 31 is adhered to the lubricating oil 32 without being separated. This improves an overall service life of the lubrication structure 3.

To implement normal relative movement between the transmission component 2 and the support component 1, there may be a gap between matching interfaces of the transmission component 2 and the support component 1. The gap is small, and a thickness of the oil film that can be formed by the lubricating oil 32 in the gap is small. A size of the spherical particle 31 cannot be limited to being very large. Otherwise, the spherical particle cannot be wrapped in the lubricating oil 32, and the spherical particle 31 cannot be adhered to the lubricating oil 32 when being quite large, and is likely to fall off in a process in which the transmission component 2 and the support component 1 move relative to each other. In addition, if a diameter size of the spherical particle 31 is above a millimeter level or a centimeter level, a structure used to fasten the spherical particle 31 needs to be separately manufactured on the transmission component 2 or the support component 1. As a result, the motor has a large size and a complex structure, and it is difficult for the lubricating oil 32 to form an oil film at a part that is of the spherical particle 31 and that is in contact with the transmission component 2 and the support component 1. The lubricating oil 32 and the spherical particle 31 cannot cooperate with each other to reduce friction. In addition, if the size of the spherical particle 31 is excessively small, the spherical particle 31 cannot be in contact with both the transmission component 2 and the support component 1, and effective rolling friction cannot be formed between the transmission component 2 and the support component 1. When squeezing force between the transmission component 2 and the support component 1 is excessively large, the thickness of the oil film formed by the lubricating oil 32 becomes thin due to the squeezing force, the lubrication effect cannot be achieved, and the transmission component 2 and the support component 1 are likely to be in contact with each other directly to form sliding friction, resulting in large friction force.

Therefore, in this embodiment, a diameter of the spherical particle 31 may be 10 µm to 500 µm. The diameter size of the spherical particle 31 is at a micron level, and can match the gap between the transmission component 2 and the support component 1. The spherical particle can be in contact with both the transmission component 2 and the support component 1, and can be covered with the lubricating oil 32. This can continuously achieve the lubrication effect in relative movement between the spherical particle 31, and the transmission component 2 and the support component 1, effectively reduce the friction resistance, further help reduce an entire size of the motor, and implement a miniaturization design of the camera module. In addition, the spherical particle 31 within the size range also has specific structural strength, and can still maintain a form when being squeezed by the transmission component 2 and the support component 1, without being damaged. This can ensure stability of movement of the transmission component 2 relative to the support component 1. In addition, because the size of the spherical particle 31 is small, a plurality of spherical particles 31 can be centrally disposed in a small area in contact with the support component 1 and the transmission component 2, and the plurality of spherical particles 31 are tiled between the support component 1 and the transmission component 2 with the lubricating oil 32. This not only does not occupy large space, but also improves stability of supporting the support component 1 and the transmission component 2. Specifically, the diameter of the spherical particle 31 may be 10 µm, 50 µm, 100 µm, 150 µm, 200 µm, 250 µm, 300 µm, 350 µm, 400 µm, 450 µm, or 500 µm.

In a specific implementation, a material of the spherical particle 31 may be metal, metal oxide, ceramic, or plastic. The metal may be steel, copper, or the like, and the metal oxide may be zirconia or the like. Therefore, the spherical particle 31 can have reliable structural strength, and can maintain a spherical form, and it is ensured that the spherical particle 31 normally rolls during working. Certainly, in some other embodiments, a material of the spherical particle 31 may alternatively be another material that can ensure structural strength. This is not limited in this embodiment.

In a specific implementation, FIG. 9 is a diagram of cooperation between a first sliding surface 12 and a second sliding surface 22 according to an embodiment of this application. With reference to FIG. 9, the support component 1 is provided with the first sliding surface 12. The first sliding surface 12 is a surface that is of the support component 1 and that is configured to slide relative to the transmission component 2. The transmission component 2 is provided with the second sliding surface 22. The second sliding surface 22 is a surface that is of the transmission component 2 and that is configured to slide relative to the support component 1. The lubrication structure 3 is disposed between the first sliding surface 12 and the second sliding surface 22.

The first sliding surface 12 and the second sliding surface 22 may be separately one of a plane, a cambered surface, a V-shaped surface, or a U-shaped surface. In other words, the first sliding surface 12 and the second sliding surface 22 may be any two of the plane, the cambered surface, the V-shaped surface, or the U-shaped surface in cooperation. The V-shaped surface may be formed by two planes at a specific angle. The U-shaped surface may be formed by a cambered surface and planes disposed oppositely on two sides of the cambered surface.

For example, with reference to FIG. 9, the first sliding surface 12 may be the V-shaped surface, the second sliding surface 22 may be the cambered surface, and the lubrication structure 3 is disposed between the V-shaped surface and the cambered surface. It may be understood that one side of the V-shaped surface is convex, the other side of the V-shaped surface is concave, one side of the cambered surface is convex, and the other side of the cambered surface is concave. In this embodiment, when the V-shaped surface and the cambered surface cooperate with each other, a direction in which the cambered surface is convex is consistent with a direction in which the V-shaped surface is convex, and the cambered surface is located on the concave side of the V-shaped surface.

For another example, both the first sliding surface 12 and the second sliding surface 22 may be the planes, and the lubrication structure 3 is disposed between the two planes. For another example, FIG. 10 is a diagram of cooperation between the first sliding surface 12 and the second sliding surface 22 according to another embodiment of this application. With reference to FIG. 10, both the first sliding surface 12 and the second sliding surface 22 may be the V-shaped surfaces, and the lubrication structure 3 is disposed between the two V-shaped surfaces. It may be understood that one side of the V-shaped surface is convex, and the other side of the V-shaped surface is concave. In this embodiment, when the two V-shaped surfaces cooperate with each other, directions in which the two V-shaped surfaces are convex are consistent.

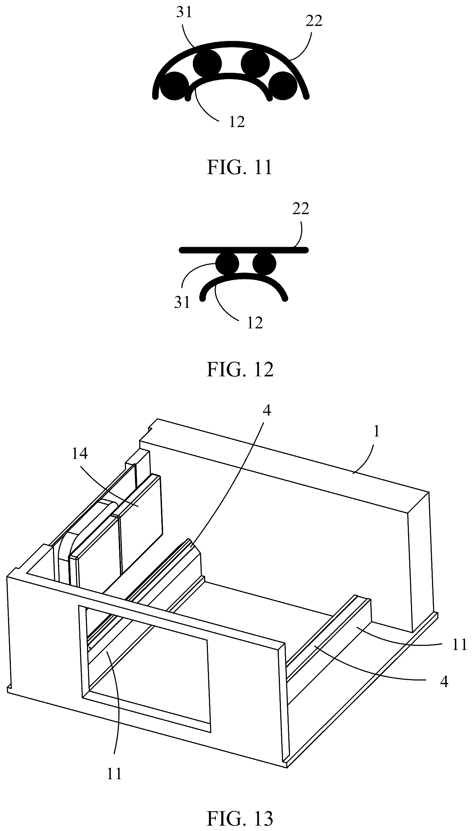

For another example, FIG. 11 is a diagram of cooperation between the first sliding surface 12 and the second sliding surface 22 according to another embodiment of this application. With reference to FIG. 11, both the first sliding surface 12 and the second sliding surface 22 may be the cambered surfaces, and the lubrication structure 3 is disposed between the two cambered surfaces. When the two cambered surfaces cooperate with each other, directions in which the two cambered surfaces are convex are consistent.

For another example, FIG. 12 is a diagram of cooperation between the first sliding surface 12 and the second sliding surface 22 according to another embodiment of this application. With reference to FIG. 12, the first sliding surface 12 may be the plane, the second sliding surface 22 may be the cambered surface, and the lubrication structure 3 is disposed between the plane and the cambered surface. When the plane cooperates with the cambered surface, one convex side of the cambered surface is close to the plane.

Certainly, in some other embodiments, the first sliding surface 12 and the second sliding surface 22 may alternatively be surfaces in other shapes. The shapes are not limited one by one herein.

The lubricating oil 32 may be liquid. Although the lubricating oil has the specific viscosity, the lubricating oil still has specific fluidity. If the lubricating oil 32 is disposed between two surfaces that are not restricted in circumferential directions, for example, the lubricating oil 32 is disposed between surfaces that are not restricted in circumferential directions, such as two planes, a plane and a chambered surface, or two surfaces, the lubricating oil 32 is likely to diffuse irregularly, and is consumed quickly. As a result, a long-term effect of reducing the friction force cannot be achieved.

Therefore, in this embodiment, with reference to FIG. 8, at least one of the support component 1 and the transmission component 2 is provided with at least one groove 4. The groove 4 is specifically provided on surfaces that are of the support component 1 and the transmission component 2 and that slide relative to each other in cooperation, and the lubrication structure 3 is disposed in the groove 4. The lubrication structure 3 may be accommodated in the groove 4 without diffusing or flowing randomly. Through an opening of the groove 4, the lubrication structure 3 in the groove 4 may be in contact with components that slide relative to each other. For example, the support component 1 is provided with the groove 4, the transmission component 2 has no groove 4, and the lubrication structure 3 in the groove 4 is in contact with the transmission component 2. For another example, the transmission component 2 is provided with the groove 4, the support component 1 has no groove 4, and the lubrication structure 3 in the groove 4 is in contact with the support component 1. For another example, the support component 1 and the transmission component 2 each are provided with the groove 4, the lubrication structure 3 in the groove 4 of the support component 1 can be in contact with the transmission component 2, and the lubrication structure 3 in the groove 4 of the transmission component 2 can be in contact with the support component 1.

A depth of the groove 4 may be less than the diameter of the spherical particle 31. Therefore, at least a part of the spherical particle 31 can protrude from the groove 4, to be in contact with components that move relative to each other outside the groove 4. This reduces friction force and implements lubrication.

In a specific embodiment, a plurality of grooves 4 are spaced from each other in a direction in which the transmission component 2 and the support component 1 slide relative to each other. Therefore, rolling friction can be formed through the spherical particle 31 in a large area in which the transmission component 2 cooperates with the support component 1, and lubrication can be implemented by using the lubricating oil 32. This improves an effect of reducing friction force.

In another specific embodiment, FIG. 13 is a diagram of a structure of the support component 1. With reference to FIG. 13, one groove 4 may be disposed, and the groove 4 continuously extends in a direction in which the transmission component 2 and the support component 1 slide relative to each other. Therefore, consistency of reducing friction force between the transmission component 2 and the support component 1 and improving the lubrication effect can be improved, and stable movement between the transmission component 2 and the support component 1 can be ensured.

In a specific implementation, one of the support component 1 and the transmission component 2 is provided with a protrusion 11, and the other of the support component and the transmission component is provided with a sliding slot 21. The transmission component 2 is slidably connected to the support component 1 through fitting between the sliding slot 21 and the protrusion 11. The lubrication structure 3 is disposed between the sliding slot 21 and the protrusion 11.

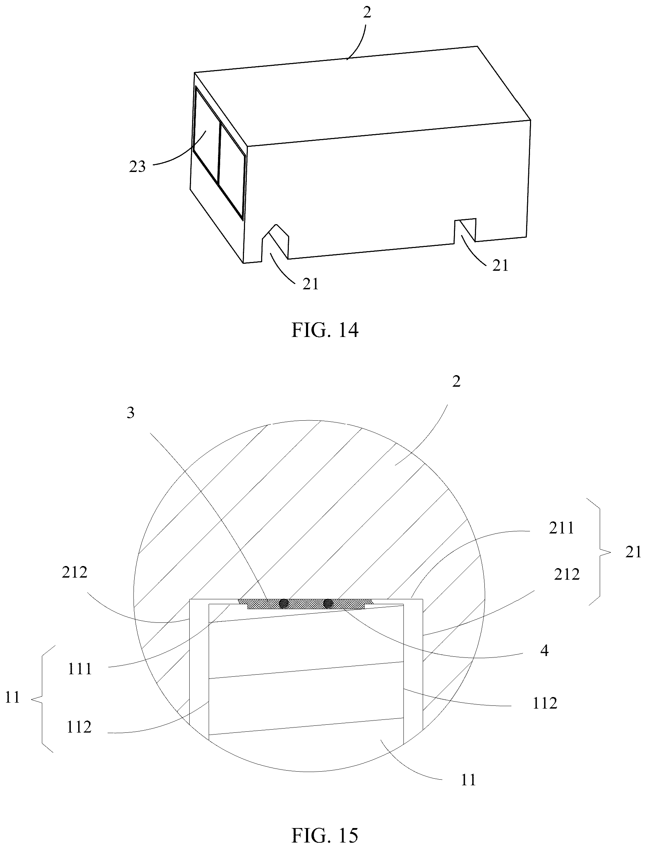

Optionally, with reference to FIG. 13, the support component 1 is provided with the protrusion 11. FIG. 14 is a diagram of a structure of the transmission component 2. With reference to FIG. 14, the transmission component 2 is provided with the sliding slot 21. Alternatively, the transmission component 2 is provided with the protrusion 11, and the support component 1 is provided with the sliding slot 21. Regardless of which of the foregoing disposition manners, through fitting between the protrusion 11 and the sliding slot 21, guidance can be provided for relative movement between the transmission component 2 and the support component 1, and stability of movement of the transmission component 2 relative to the support component 1 is ensured. In addition, the lubrication structure 3 is filled between the protrusion 11 and the sliding slot 21, so that the transmission component 2 and the support component 1 can be separately in rolling contact with the spherical particle 31, to form rolling friction. In addition, by using the lubricating oil 32 and the oil film on the spherical particle 31, friction force can be effectively reduced, steady-state power consumption of the motor can be reduced, and the mute effect can also be achieved.

In a specific implementation, the sliding slot 21 is one of an arc-shaped slot, a V-shaped slot, a U-shaped slot, or a trapezoidal slot. The U-shaped slot includes a type with an arc-shaped angle or an edge angle at a corner. It may be understood that the sliding slot 21 is a concave structure and has a specific length, and the protrusion 11 can slide in the sliding slot 21 in a length direction of the sliding slot. In a direction perpendicular to the length of the sliding slot 21, a shape formed by an inner surface of the sliding slot 21 in a cross section of the sliding slot 21 is an arc shape, a V shape, a U shape, or a trapezoid. The inner surface of the sliding slot 21 is the second sliding surface 22 of the transmission component 2. Certainly, in some other embodiments, the shape may alternatively be another shape. Regardless of which shape is used, the protrusion 11 can be guided, and a design of the sliding slot 21 is more flexible. The lubrication structure 3 is a solid-liquid two-phase structure including the liquid lubricating oil 32 and the solid spherical particles 31. Regardless of which shape is used for the sliding slot 21, the lubrication structure can be disposed between the sliding slot 21 and the protrusion 11, without occupying extra space.

In a specific implementation, a cross-sectional shape of the protrusion 11 is one of a semicircular arc shape, an elliptical arc shape, a U shape, a triangle, or a trapezoid. The protrusion 11 also has a specific length. A length direction of the protrusion is a direction in which the protrusion 11 slides relative to the sliding slot 21. A cross section of the protrusion 11 is a cross section perpendicular to the length direction of the protrusion 11. An outer surface that is of the protrusion 11 and that cooperates with the sliding slot 21 is the first sliding surface 12 of the support component 1. The cross-sectional shape of the protrusion 11 is not limited to the foregoing enumerated shapes, and may alternatively be another regular or irregular shape. The shape of the protrusion 11 may be flexibly designed based on an actual design situation of the motor. Regardless of which shape is used for the protrusion 11, the solid-liquid two-phase lubrication structure 3 can be disposed between the protrusion 11 and the sliding slot 21, to reduce friction between the transmission component 2 and the support component 1 and reduce steady-state power consumption of the motor.

Specifically, the shape of the sliding slot 21 may be the same as or different from the shape of the protrusion 11. Optionally, FIG. 15 is an enlarged view at a position C in FIG. 2. With reference to FIG. 15, the sliding slot 21 is the U-shaped slot, a corner of the U-shaped slot is a right angle, the cross-sectional shape of the protrusion 11 is also a U shape, and a corner of the U shape is also a right angle. The protrusion 11 whose cross-sectional shape is the U shape has one top surface 111 and two outer side surfaces 112. The two outer side surfaces 112 are two outer surfaces in a width direction of the protrusion 11, and are respectively located on two sides of the top surface 111. The sliding slot 21 is the concave structure, and has a bottom surface 211 and two inner side surfaces 212. The bottom surface 211 of the sliding slot 21 is opposite to the top surface 111 of the protrusion 11, and the two inner side surfaces 212 of the sliding slot 21 are respectively opposite to the two outer side surfaces 112 of the protrusion 11. The lubrication structure 3 may be disposed only between the bottom surface 211 of the sliding slot 21 and the top surface 111 of the protrusion 11, or may be disposed only between the inner side surface 212 of the sliding slot 21 and the outer side surface 112 of the protrusion 11, or may be disposed not only between the bottom surface 211 of the sliding slot 21 and the top surface 111 of the protrusion 11 but also between the inner side surface 212 of the sliding slot 21 and the outer side surface 112 of the protrusion 11. The spherical particle 31 can be in rolling contact with both the sliding slot 21 and the protrusion 11, to reduce friction.

To restrict the lubrication structure 3 and prevent the lubricating oil 32 and the spherical particles 31 from diffusing irregularly, at least one of the top surface 111 and the outer side surface 112 of the protrusion 11 that are configured to cooperate with the sliding slot 21 is provided with a groove 4 and/or at least one of the bottom surface 211 and the inner side surface 212 of the sliding slot 21 that are configured to cooperate with the protrusion 11 is provided with a groove 4. The lubrication structure 3 is disposed in the groove 4. In addition, a depth of the groove 4 is less than the diameter of the spherical particle 31, to ensure that at least a part of the spherical particle 31 can extend out of the groove 4, to be in contact with an external component.

Optionally, with reference to FIG. 10, the sliding slot 21 is a V-shaped slot, and the cross-sectional shape of the protrusion 11 is a triangle. The sliding slot 21 has two inclined inner surfaces at a specific induced angle. The inner surface is the second sliding surface 22 of the transmission component 2. The second sliding surface 22 is a V-shaped surface. The protrusion 11 also has two inclined outer surfaces at a specific included angle. The outer surface is the first sliding surface 12 of the support component 1. The first sliding surface 12 is also a V-shaped surface. The two outer surfaces of the protrusion 11 can cooperate with the two corresponding inner surfaces of the sliding slot 21. The lubrication structure 3 may be disposed between the corresponding outer surface of the protrusion 11 and the inner surface of the sliding slot 21. At least one of the inner surface of the sliding slot 21 and the outer surface of the protrusion 11 may also be provided with a groove 4, and the lubrication structure 3 is disposed in the groove 4. This can prevent the lubrication structure 3 from diffusing irregularly.

Optionally, with reference to FIG. 11, the sliding slot 21 is an arc-shaped slot, and the cross-sectional shape of the protrusion 11 is an arc shape. That is, the second sliding surface 22 of the transmission component 2 is an arc-shaped surface, and the first sliding surface 12 of the support component 1 is an arc-shaped surface. An arc-shaped inner surface in the sliding slot 21 cooperates with an arc-shaped outer surface of the protrusion 11. The lubrication structure 3 may be disposed between the arc-shaped inner surface and outer surface.

Optionally, with reference to FIG. 12, the sliding slot 21 is a square slot, and the cross-sectional shape of the protrusion 11 is an arc shape. That is, an outer surface of the protrusion 11 is the first sliding surface 12 and is an arc-shaped surface, and a bottom surface of the sliding slot 21 is the second sliding surface 22 and is a plane. A gap between the outer surface of the protrusion 11 and the sliding slot 21 is uneven. A distance between the vertex of the protrusion 11 and the bottom surface of the sliding slot 21 is relatively minimum. The lubrication structure 3 may be disposed between an area of the protrusion 11 near the vertex and the bottom surface of the sliding slot 21. In this way, the spherical particle 31 can be in rolling contact with both the protrusion 11 and the sliding slot 21, to implement a function of reducing friction. Certainly, the lubrication structure 3 may also be filled in another gap position that is between the protrusion 11 and the sliding slot 21 and that is far away from the vertex of the protrusion 11, and sliding friction between the protrusion 11 and the sliding slot 21 is reduced by using a lubrication function of the lubricating oil 32. The arc-shaped outer surface of the protrusion 11 or the inner surface of the sliding slot 21 may also be provided with a groove 4, to restrict the lubrication structure 3.

In some other embodiments, a surface that is of the transmission component 2 and that cooperates with the protrusion 11 in the support component 1 is a plane. With reference to FIG. 12, a feature design like a depression or a protrusion may not be disposed on the plane, and the lubrication structure 3 may alternatively be disposed between the plane and the protrusion 11.

In a specific implementation, the support component 1 and the transmission component 2 each may be an integrated structure. The protrusion 11 or the groove 4 may be synchronously processed and formed in a molding process of the support component 1 or the transmission component 2, without separately processing the protrusion 11 or the groove 4 by using a separate process. Therefore, the support component 1 or the transmission component 2 has high structural reliability, and is also convenient for processing and manufacturing. For example, integrated injection molding or stamping molding may be used for the support component 1 or the transmission component 2 based on a used material.

For a surface that is of the support component 1 or the transmission component 2 and that is configured for mutual cooperation, in an integration manner, consistency of the surface can be improved, so that the support component 1 cooperates with the transmission component 2 more reliably. It can be ensured that, when the lubrication structure 3 is filled between the support component 1 and the transmission component 2, the spherical particle 31 can be in rolling contact with the support component 1 and the transmission component 2. This improves the effect of reducing the friction force.

In a specific implementation, with reference to FIG. 9, the support component 1 is provided with a guide shaft 13. The transmission component 2 is provided with a guide hole or a guide slot. The guide hole or the guide slot is slidably sleeved on the guide shaft 13. The lubrication structure 3 is disposed between the guide hole or the guide slot and the guide shaft 13.

For example, when the transmission component 2 is provided with the guide hole, the guide shaft 13 may penetrate into the guide hole, and the transmission component 2 may slide on the guide shaft 13 via the guide hole. The lubrication structure 3 may be filled between an inner wall of the guide hole and the guide shaft 13. For example, when the transmission component 2 is provided with the guide slot, the guide slot may be sleeved on at least a part of a periphery in a circumferential direction of the guide shaft 13, so that the transmission component 2 may slide on the guide shaft 13 via the guide slot. The lubrication structure 3 may be disposed between the guide slot and the guide shaft 13. The guide slot may be the sliding slot 21, and may have a plurality of different shapes. With reference to FIG. 9, the guide slot is a V-shaped slot. A design in which the guide slot is a slot in another shape is not described herein again.

At least one of an outer surface of the guide shaft 13 and an inner surface of the guide hole or the guide slot may be provided with a groove 4. The lubrication structure 3 is disposed in the groove 4. Therefore, the lubrication structure 3 can be prevented from flowing irregularly. A depth of the groove 4 is less than the diameter of the spherical particle 31. This can ensure that at least a part of the spherical particle 31 can extend out of the groove 4 to be in contact with an external component.

In a specific implementation, with reference to FIG. 13 and FIG. 14, one of the support component 1 and the transmission component 2 is provided with a first magnetic member 14, and the other of the support component and the transmission component is provided with a second magnetic member 23 or a magnetic conductive member. The support component 1 and the transmission component 2 are squeezed on two sides of at least the part of the spherical particles 31 through adsorption cooperation between the first magnetic member 14 and the second magnetic member 23 or adsorption cooperation between the first magnetic member 14 and the magnetic conductive member.

When one of the support component 1 and the transmission component 2 is provided with the first magnetic member 14, and the other of the support component and the transmission component is provided with the second magnetic member 23, magnetic poles on sides that are of the first magnetic member 14 and the second magnetic member 23 and that are close to each other are opposite, so that mutual attraction force is generated between the first magnetic member 14 and the second magnetic member 23. When one of the support component 1 and the transmission component 2 is provided with the first magnetic member 14, and the other of the support component and the transmission component is provided with the magnetic conductive member, the magnetic conductive member may be pure iron, silicon steel, permalloy, or the like, and mutual attraction force may alternatively be generated between the first magnetic member 14 and the magnetic conductive member.

Specifically, the following uses an example in which the support component 1 is provided with the protrusion 11 and the transmission component 2 is provided with the sliding slot 21 for description.

The protrusion 11 may extend into the sliding slot 21, and can move in the sliding slot 21. When the sliding slot 21 is a square slot, and the cross-sectional shape of the protrusion 11 is square, the outer side surface of the protrusion 11 is opposite to the inner side surface of the sliding slot 21, and the top surface of the protrusion 11 is opposite to the bottom surface of the sliding slot 21. To facilitate assembly of the protrusion 11 and the sliding slot 21 and facilitate relative movement between the protrusion 11 and the sliding slot 21, a gap exists between the protrusion 11 and the sliding slot 21, causing a shake amount to be generated between the protrusion 11 and the sliding slot 21 at a position where the gap exists, which is not conducive to relative stable movement between the transmission component 2 and the support component 1. In addition, if the gap is greater than the diameter of the spherical particle 31, it is not conducive to reliable contact between the spherical particle 31 and the protrusion 11 or the sliding slot 21, and it is not conducive to implementing rolling friction. In addition, even if a gap between the spherical particle 31 and the protrusion 11 or the sliding slot 21 is filled with the lubricating oil 32, because the lubricating oil 32 has fluidity, the protrusion 11 and the sliding slot 21 also have a shake amount at the gap.

Therefore, in this embodiment, the first magnetic member 14 and the second magnetic member 23 or the magnetic conductive member that attract each other are disposed on the transmission component 2 and the support component 1. Through the attraction force, an outer surface of one side of the protrusion 11 closely presses against an inner surface of one side of the sliding slot 21, and the spherical particle 31 disposed between surfaces that are of the protrusion 11 and the sliding slot 21 and that press against each other may be squeezed between the protrusion 11 and the sliding slot 21. Therefore, the spherical particle 31 can reliably and stably roll between the protrusion 11 and the sliding slot 21. This helps reduce friction force between the protrusion 11 and the sliding slot 21. In addition, a position at which the protrusion 11 and the sliding slot 21 press against each other may be used as a reference for relative movement between the transmission component 2 and the support component 1. This can avoid relative shake between the transmission component 2 and the support component 1, ensure stable movement of the transmission component 2, and have high transmission precision. Both the first magnetic member 14 and the second magnetic member 23 may be magnets.

Optionally, with reference to FIG. 13, the first magnetic member 14 may be disposed in a side direction of the support component 1, and the side direction of the support component 1 is a side that is of the support component 1 and that is perpendicular to the direction in which the transmission component 2 and the support component 1 slide relative to each other. With reference to FIG. 14, the second magnetic member 23 or the magnetic conductive member is disposed on a side that is of the transmission component 2 and that is close to the first magnetic member 14. Through adsorption force between the first magnetic member 14 and the second magnetic member 23 or the magnetic conductive member, the outer surface of the side of the protrusion 11 can press against the inner surface of the side of the sliding slot 21, and relative shake between the transmission component 2 and the support component 1 can be avoided at the pressing position.

Optionally, the first magnetic member 14 may be disposed at the bottom of the support component 1, and the second magnetic member 23 or the magnetic conductive member is disposed at the bottom of the transmission component 2. In this way, adsorption force is generated between the bottom of the support component 1 and the bottom of the transmission component 2, and the top of the protrusion 11 presses against the bottom of the sliding slot 21. Relative shake between the transmission component 2 and the support component 1 can be avoided at the pressing position.

When the first magnetic member 14 is disposed at the bottom of the support component 1, a position of the first magnetic member 14 may be aligned with a position of the protrusion 11, and a position of the second magnetic member 23 or the magnetic conductive member on the transmission component 2 may also be aligned with a position of the sliding slot 21. This helps the top surface of the protrusion 11 and the bottom surface of the sliding slot 21 press each other more reliably, and movement stability between the transmission component 2 and the support component 1 is ensured. In this embodiment, one or more first magnetic members 14 may be disposed, and a quantity of first magnetic members 14 may be the same as a quantity of protrusions 11. Correspondingly, a quantity of second magnetic members 23 or magnetic conductive members may also be the same as a quantity of sliding slots 21. This helps the protrusion 11 stably fit the sliding slot 21, and helps improve stability of movement between the transmission component 2 and the support component 1.

The foregoing descriptions are merely preferred embodiments of this application, and are not intended to limit this application. For a person skilled in the art, this application may have various modifications and variations. Any modification, equivalent replacement, improvement, or the like made without departing from the spirit and principle of this application shall fall within the protection scope of this application.

## Claims

1. A voice coil motor, wherein the voice coil motor is used in a camera module, and the voice coil motor comprises:
a support component;
a transmission component, wherein the transmission component moves relative to the support component; and
a lubrication structure, wherein the lubrication structure is disposed between the support component and the transmission component, the lubrication structure comprises lubricating oil and a plurality of spherical particles dispersed in the lubricating oil, at least a part of the spherical particles have one side in contact with the support component and another side in contact with the transmission component, and when the support component and the transmission component move relative to each other, at least the part of the spherical particles roll relative to the support component and the transmission component.

2. The voice coil motor according to claim 1, wherein a diameter of the spherical particle is 10 µm to 500 µm.

3. The voice coil motor according to claim 1 or 2, wherein one of the support component and the transmission component is provided with a protrusion, the other of the support component and the transmission component is provided with a sliding slot, and the transmission component is slidably connected to the support component through fitting between the sliding slot and the protrusion; and
the lubrication structure is disposed between the sliding slot and the protrusion.

4. The voice coil motor according to claim 3, wherein the sliding slot is one of an arc-shaped slot, a V-shaped slot, a U-shaped slot, or a trapezoidal slot.

5. The voice coil motor according to claim 4, wherein a cross-sectional shape of the protrusion is one of a semicircular arc shape, an elliptical arc shape, a U shape, a triangle, or a trapezoid.

6. The voice coil motor according to any one of claims 3 to 5, wherein at least one of an outer surface of the protrusion and an inner surface of the sliding slot is provided with a groove, and the lubrication structure is disposed in the groove; and
a depth of the groove is less than the diameter of the spherical particle.

7. The voice coil motor according to claim 1 or 2, wherein the support component is provided with a guide shaft, the transmission component is provided with a guide hole or a guide slot, and the guide hole or the guide slot is slidably sleeved on the guide shaft; and
the lubrication structure is disposed between the guide hole or the guide slot and the guide shaft.

8. The voice coil motor according to claim 7, wherein at least one of an outer surface of the guide shaft and an inner surface of the guide hole or the guide slot is provided with a groove, and the lubrication structure is disposed in the groove; and
a depth of the groove is less than the diameter of the spherical particle.

9. The voice coil motor according to claim 6 or 8, wherein a plurality of grooves are spaced from each other in a direction in which the transmission component and the support component slide relative to each other.

10. The voice coil motor according to claim 6 or 8, wherein one groove is disposed, and the groove continuously extends in a direction in which the transmission component and the support component slide relative to each other.

11. The voice coil motor according to any one of claims 1 to 10, wherein one of the support component and the transmission component is provided with a first magnetic member, and the other of the support component and the transmission component is provided with a second magnetic member or a magnetic conductive member; and
the support component and the transmission component are squeezed on two sides of at least the part of the spherical particles through adsorption cooperation between the first magnetic member and the second magnetic member or adsorption cooperation between the first magnetic member and the magnetic conductive member.

12. The voice coil motor according to claim 11, wherein the first magnetic member is disposed in a side direction or at a bottom of the support component; and
the second magnetic member or the magnetic conductive member is disposed in a side direction or at a bottom of the transmission component.

13. The voice coil motor according to any one of claims 1 to 12, wherein one of the support component and the transmission component is provided with a coil, the other of the support component and the transmission component is provided with a third magnetic member, and the transmission component moves relative to the support component under drive of driving force generated through cooperation between the coil and the third magnetic member after the coil is electrified.

14. The voice coil motor according to any one of claims 1 to 13, wherein a material of the spherical particle is metal, metal oxide, ceramic, or plastic.

15. The voice coil motor according to any one of claims 1 to 14, wherein the support component and the transmission component each are an integrated structure.

16. A camera module, comprising a lens assembly and the voice coil motor according to any one of claims 1 to 15, wherein the lens assembly is connected to the transmission component of the voice coil motor;
the support component of the voice coil motor is provided with a first hole, one of the support component and the transmission component is provided with the coil, the other of the support component and the transmission component is provided with the third magnetic member, and the coil and the third magnetic member are spaced from each other in a direction perpendicular to a center line of the first hole; and
under drive of the transmission component, the lens assembly moves for focusing in the first hole in a direction parallel to the center line of the first hole.

17. A camera module, comprising an image obtaining apparatus and the voice coil motor according to any one of claims 1 to 15, wherein the image obtaining apparatus is connected to the transmission component of the voice coil motor;
the support component of the voice coil motor is provided with a second hole, and the image obtaining apparatus obtains an external image through the second hole;
one of the support component and the transmission component is provided with the coil, the other of the support component and the transmission component is provided with the third magnetic member, and the coil and the third magnetic member are spaced from each other in a direction parallel to a center line of the second hole; and
under drive of the transmission component, the image obtaining apparatus moves in a direction perpendicular to the center line of the second hole, to compensate for a jitter amount of the camera module.

18. The camera module according to claim 17, wherein the image obtaining apparatus comprises a lens assembly or an image sensor.

19. An electronic device, comprising the camera module according to any one of claims 16 to 18.
